# FASCICULE DE BREVET EUROPEEN

(11) **EP 0 426 513 B1**
(45) Date de publication et mention de la délivrance du brevet: **28.07.1993**
(21) Numéro de dépôt: 90402687.9
(22) Date de dépôt: 28.09.1990
(51) Int. Cl.: B60T 13/14

(54) **Circuit de freinage à amplification hydraulique et ensemble de freinage comprenant un tel circuit**
Bremskreis mit hydraulischer Verstärkung und Bremseinheit die einen solchen Kreis enthält
Brake circuit with hydraulic assistance and brake unit comprising the same

(30) Priorité: 31.10.1989 FR 8914254
(43) Date de publication de la demande: 08.05.1991
(73) Titulaire: ALLIEDSIGNAL EUROPE SERVICES TECHNIQUES, 93700 Drancy (FR)
(72) Inventeur: Douillet, Christian, c/o Bendix Europe, FR-93700 Drancy (FR)
(74) Mandataire: Bentz, Jean-Paul

(56) Documents cités:
- EP-A- 0 197 803
- DE-A- 3 048 847
- GB-A- 2 074 274

## Description

La présente invention concerne un circuit de freinage à amplification hydraulique et un ensemble de freinage comprenant un tel circuit.

On sait que les dispositifs pneumatiques à dépression utilisés pour amplifier l'effort appliqué sur la pédale de frein par le conducteur d'un véhicule prennent beaucoup d'espace, et il est souvent souhaitable d'obtenir une amplification hydraulique de cet effort. Dans ce cas, le maître-cylindre peut être fixé directement au tablier séparant le compartiment moteur du compartiment habitable du véhicule, les circuits d'amplification pouvant alors être disposés en tout autre lieu susceptible de les accueillir. Une telle amplification hydraulique permet notamment l'adaptation aisée d'un véhicule indifféremment à la conduite à gauche ou à la conduite à droite. Toutefois, on sait également que les règles élémentaires de sécurité exigent que l'ensemble de freinage fonctionne de façon conventionnelle en cas de défaillance des circuits d'amplification au prix, certes, d'un effort plus important sur la pédale de frein de la part du conducteur du véhicule.

Les circuits de ce type comportent généralement des électrovalves de commande qu'il est souhaitable d'éliminer vu leur prix et leur durée de vie.

La présente invention a donc pour objet un tel circuit et l'ensemble de freinage correspondant.

L'invention concerne donc plus précisément un circuit de freinage à amplification hydraulique de l'effort d'entrée relié à une chambre de travail d'un maître-cylindre commandé par une pédale de frein et comprenant une source de fluide sous haute pression, un moteur de frein, une première valve pilotée établissant ou interrompant par l'intermédiaire d'un clapet anti-retour une communication entre la source de fluide sous pression et le moteur de frein en fonction de la différence entre les pressions du fluide de la source et du fluide dans la chambre de travail du maître cylindre, et une deuxième valve pilotée par la pression du fluide de la source et comportant un clapet interrompant normalement une communication entre la chambre de travail et le moteur de frein, et établissant cette communication en cas de défaillance de la source.

Le document FR-A-2 480 371 décrit un émetteur d'embrayage assisté basé sur ce principe. Toutefois, son fonctionnement en cas de défaillance de la source nécessite un effort très important.

Selon l'invention, la première valve pilotée comprend une première chambre reliée à la chambre de travail, une deuxième chambre reliée par l'intermédiaire du clapet anti-retour à la source de fluide sous pression, et une troisième chambre, entre les première et deuxième chambres, reliée à un réservoir de fluide sous basse pression par l'intermédiaire d'une troisième valve pilotée par la pression du fluide de la source, la troisième valve comportant un clapet établissant normalement une communication entre le réservoir et la troisième chambre, et interrompant cette communication en cas de défaillance de la source de fluide sous pression. Elle comprend deux tiroirs en série de diamètres différents venant ouvrir en réponse à la pression du fluide dans la chambre de travail du maître-cylindre dans un premier temps un premier clapet mettant en communication la deuxième chambre et le moteur de frein, et dans un deuxième temps, un deuxième clapet mettant en communication la source de pression et la deuxième chambre par l'intermédiaire d'un clapet anti-retour.

De préférence, il comprend en outre une quatrième valve pilotée par la pression de la source et comportant un clapet établissant normalement une communication entre une chambre de travail du maître-cylindre et une capacité pour déterminer une course à la pédale, et interrompant la communication en cas de défaillance de la source.

On comprendra qu'un tel circuit de freinage peut être dupliqué pour commander séparément les deux circuits habituels de freinage respectivement reliés aux deux chambres de travail d'un maître-cylindre. Toutefois, selon l'invention, on peut relier une première chambre de travail du maître-cylindre à la quatrième valve, tandis que la seconde chambre de travail est reliée aux première et deuxième valves.

Dans ce cas, de préférence, l'ensemble de freinage comprend une cinquième valve pilotée par la pression du fluide de la source et comportant un clapet interrompant normalement une communication entre la première chambre de travail du maître-cylindre et un premier jeu de moteurs de frein, et une sixième valve pilotée par la pression du fluide de la source et comprenant un clapet établissant normalement une communication entre le premier jeu de moteurs de frein et un second jeu de moteurs de frein, les première et deuxième valves étant reliées au second jeu de moteurs de frein, de telle façon qu'en cas de défaillance de la source, le maître-cylindre puisse fonctionner correctement avec isolation des deux circuits de freinage l'un par rapport à l'autre.

L'invention sera mieux comprise et d'autres buts, avantages et caractéristiques apparaîtront plus clairement à la lecture de la description de modes de réalisation donnés à titre non limitatif, à laquelle sont jointes deux planches de dessins sur lesquelles :
- la Figure 1 représente schématiquement un circuit de freinage conforme à l'invention,
- la Figure 2 représente en coupe schématique une première valve pilotée par la différence des pressions susceptible d'être utilisée pour mettre en oeuvre l'invention, et
- la Figure 3 illustre schématiquement un ensemble de freinage selon l'invention.

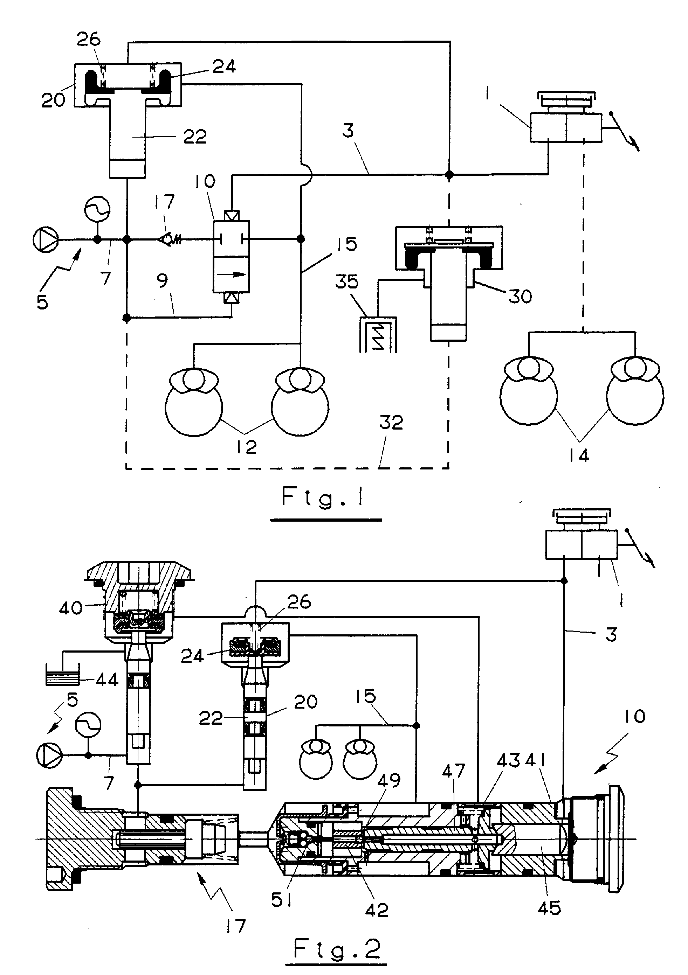

En référence maintenant à la Figure 1, un maître-cylindre commandé par une pédale de frein a été représenté schématiquement sous la référence 1. Le circuit illustré est relié à une chambre de travail du maître-cylindre. Il est évident qu'un autre circuit identique peut-être relié à l'autre chambre de travail du maître-cylindre de manière à commander un autre circuit de freinage indépendant.

Une valve 10 à deux positions, est pilotée par la différence des pressions régnant dans la chambre de travail du maître-cylindre et dans la source de fluide sous pression 5, ici représentée par une pompe et un accumulateur. Dans ce but, la chambre de travail est reliée à la valve 10 au moyen d'un conduit 3 et la source de fluide sous pression 5 est reliée à la valve 10 au moyen d'un conduit 7,9.

En fonction de la différence entre ces pressions, la valve 10 établit ou interrompt une communication entre le conduit 7 et un jeu de moteurs de frein 12 par l'intermédiaire d'un conduit 15. Une valve anti-retour 17 disposée entre la valve 10 et la source 5 permet d'éviter un retour de fluide sous pression vers la source 5.

Une valve 20 pilotée par la pression de la source 5 comporte un piston 22, pourvu d'une tête formant clapet 24 disposé dans un alésage etagé. Lorsque le fluide de la source 5 présente une pression suffisante pour vaincre la force d'un ressort de rappel 26, le piston coulisse vers le haut (sur les Figures) et interrompt ainsi une communication entre les conduits 3 et 15 qui sont tous deux reliés à la partie élargie de l'alésage.

Ainsi, lorsque la source de fluide sous pression 5 fonctionne correctement, un effort exercé sur la pédale de frein se traduit par une mise en communication de la source de fluide sous pression 5 et des moteurs de frein 12 jusqu'à ce que la différence des pressions précitées entraîne à nouveau l'interruption de cette communication.

En cas de défaillance de la source 5, le clapet de la valve 20 s'ouvre sous l'effet du ressort 26 mettant en communication directe le maître-cylindre 1 et les moteurs de frein 12.

Ainsi le circuit fonctionne-t-il aussi bien en amplification de l'effort, qu'en cas de défaillance.

On a représenté en pointillés Figure 1 un dispositif permettant de simuler la course du piston du maître-cylindre en fonctionnement normal et mettant hors service cette simulation en cas de défaillance de la source 5. Ce dispositif est constitué par une valve 30 pilotée par la pression du fluide de la source 5 à laquelle elle est reliée par un conduit 32. Cette valve 30 est réalisée pour qu'en fonctionnement normal, une communication soit établie entre le conduit 3 et un réservoir 35 formant capacité, un ressort permettant de mouvoir le clapet pour interrompre cette communication en cas de défaillance de la source de fluide sous pression 5.

On a représenté schématiquement Figure 2 un mode de réalisation de ce circuit. On retrouve sur cette Figure les mêmes références pour désigner les mêmes éléments. Le conduit 3 est relié à une première chambre 41 qui est également reliée à la valve 20.
Un tiroir 45 est susceptible de coulisser dans un alésage sous l'effet de la pression dans ce conduit 3 qui est relié à une chambre de travail du maître-cylindre. Un deuxième tiroir 47 en série avec le premier tiroir 45 est également susceptible de coulisser avec le premier tiroir. Le tiroir 45 présente un diamètre supérieur à celui du tiroir 47. Du fait de la différence des diamètres des deux tiroirs 45,47, on obtient un effet d'amplification permettant d'ouvrir le clapet 49 mettant en communication une deuxième chambre 42 et le conduit 15 relié aux moteurs de frein 12, puis d'ouvrir le clapet 51 mettant en communication la source de fluide sous pression 5 et la deuxième chambre 42 par l'intermédiaire du clapet anti-retour 17. Entre les première et deuxième chambres 41,42, on prévoit, bien sur, une troisième chambre 43 permettant d'isoler la source 5 et le conduit 3. Cette troisème chambre 43 contiendra favorablement un ressort permettant de rappeler les tiroirs 45,47 en absence de pression dans le conduit 3. Cette troisième chambre 43 est reliée à un réservoir basse pression 44 par l'intermédiaire d'une quatrième valve 40 également pilotée par la pression régnant dans la source 5, de telle manière que la communication entre cette troisième chambre 43 et le réservoir 44 soit normalement établie, mais qu'elle soit interrompue en cas de défaillance de la source 5 pour interdire tout mouvement nuisible des tiroirs 47,45.

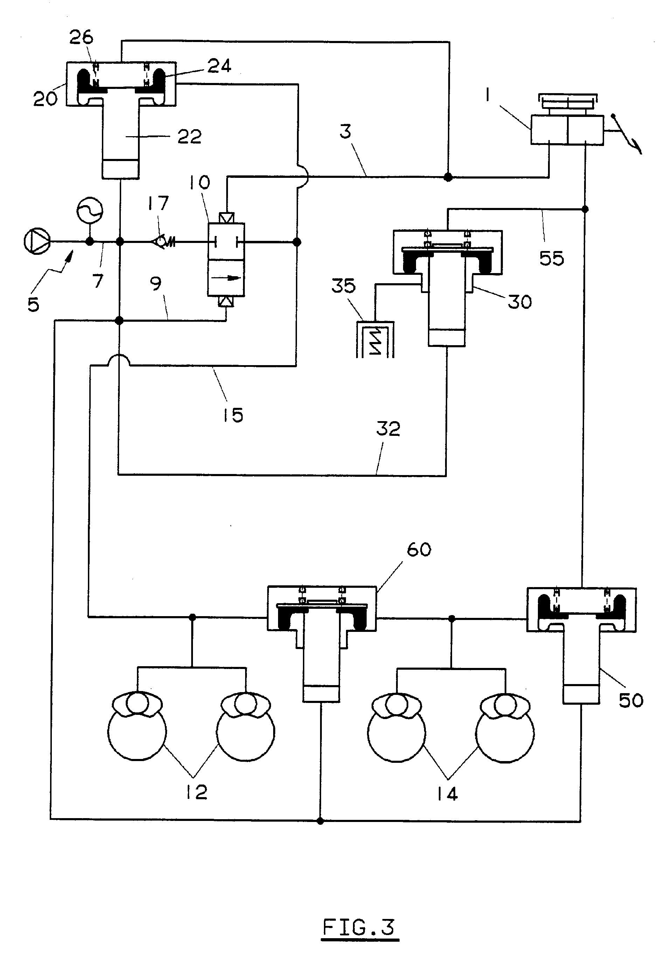

On a représenté schématiquement Figure 3, un ensemble de freinage du même type mais dans lequel le circuit d'amplification, en trait plein Figure 1, est relié à une chambre de travail du maître-cylindre tandis que le dispositif de simulation de la course de la pédale 30,35 est relié à l'autre chambre de travail du maître-cylindre 1. Les éléments communs portant les mêmes références ne seront pas décrits à nouveau par la suite. L'homme du métier verra immédiatement sur ce schéma que le circuit d'amplification est unique pour les deux jeux de moteurs de frein 12 et 14 équipant le véhicule. Toutefois pour assurer la sécurité, le maître-cylindre 1 fonctionnera de manière classique dynamique, une chambre de travail séparée étant affectée à chacun des jeux de moteurs de frein en cas de défaillance de la source 5. A cet effet, la première chambre de travail du maître-cylindre 1 qui est reliée au dispositif de simulation 30,35 par l'intermédiaire d'un conduit 55 est également reliée au jeu 14 de moteurs de frein par l'intermédiaire d'une cinquième valve 50 pilotée par la pression de la source 5 à laquelle elle est connectée par le conduit 7. Cette valve 50 normalement interrompt la communication entre la première chambre du maître-cylindre et le jeu 14, et en cas de défaillance de la source 5, l'établit. Une sixième valve 60 également pilotée par la pression dans la source 5 normalement établit une communication entre les deux jeux 12 et 14, mais interrompt cette communication en cas de défaillance de la source 5.

Ainsi normalement, le circuit d'amplification est commandé par la pression régnant dans une seule chambre de travail du maître-cylindre, et agit sur les deux jeux de moteurs de frein, l'autre chambre de travail n'assurant que la simulation de la course de la pédale de frein. En cas de défaillance de la source 5, le circuit d'amplification est mis hors service ainsi que le dispositif de simulation, les deux jeux de moteurs de frein sont isolés l'un de l'autre, et sont chacun reliés respectivement à une des chambres de travail du maître-cylindre qui fonctionne alors dynamiquement en maître-cylindre classique.

Bien évidemment, l'homme du métier pourra apporter de nombreuses modifications aux circuits, ensembles et valves décrits et représentés sans sortir du cadre de la présente invention tel que défini par les revendications annexées.

## Revendications

1. Circuit de freinage à amplification hydraulique de l'effort d'entrée relié à une chambre de travail d'un maître-cylindre (1) commandé par une pédale de frein et comprenant une source de fluide sous haute pression (5), un moteur de frein (12,14), une première valve (10) pilotée établissant ou interrompant par l'intermédiaire d'un clapet anti-retour (17) une communication entre ladite source de fluide sous pression (5) et ledit moteur de frein (12) en fonction de la différence entre les pressions du fluide de ladite source (5) et du fluide dans ladite chambre de travail du maître cylindre (1), et une deuxième valve (20) pilotée par la pression du fluide de ladite source (5) et comportant un clapet (24) interrompant normalement une communication entre ladite chambre de travail et ledit moteur de frein, et établissant cette communication en cas de défaillance de la source, caractérisé en ce que ladite première valve pilotée (10) comprend une première chambre (41) reliée à ladite chambre de travail, une deuxième chambre (42) reliée par l'intermédiaire dudit clapet anti-retour (17) à ladite source de fluide sous pression (5), et une troisième chambre (43), entre lesdites première et deuxième chambres, reliée à un réservoir de fluide sous basse pression (44) par l'intermédiaire d'une troisième valve (40) pilotée par la pression du fluide de ladite source (5), ladite troisième valve (40) comportant un clapet établissant normalement une communication entre ledit réservoir (44) et ladite troisième chambre (43), et interrompant cette communication en cas de défaillance de ladite source de fluide sous pression (5).

2. Circuit de freinage selon la revendication 1, caractérisé en ce que ladite première valve (10) pilotée comprend deux tiroirs (45,47) en série de diamètres différents venant ouvrir en réponse à la pression du fluide dans la chambre de travail dudit maître-cylindre (1) dans un premier temps un premier clapet (49) mettant en communication ladite deuxième chambre (42) et ledit moteur de frein (12), et dans un deuxième temps, un deuxième clapet (51) mettant en communication ladite source de fluide sous pression (5) et ladite deuxième chambre (42) par l'intermédiaire d'un clapet anti-retour (17).

3. Circuit de freinage selon la revendication 1 ou 2, caractérisé en ce qu'il comprend en outre une quatrième valve (30) pilotée par la pression de ladite source (5) et comportant un clapet établissant normalement une communication entre une chambre de travail dudit maître-cylindre (1) et une capacité (35) pour déterminer une course à ladite pédale, et interrompant ladite communication en cas de défaillance de la source.

4. Ensemble de freinage hydraulique comprenant un maître-cylindre comportant deux chambres de travail, caractérisé en ce qu'il comprend deux circuits séparés selon l'une quelconque des revendications précédentes respectivement reliés à chacune desdites chambres de travail.

5. Ensemble de freinage hydraulique comprenant un maître-cylindre comportant deux chambres de travail, caractérisé en ce qu'il comprend un seul circuit selon la revendication 3, une première chambre de travail dudit maître-cylindre (1) étant reliée à ladite quatrième valve (30), tandis que la seconde chambre de travail est reliée auxdites première et deuxième valves (10,20).

6. Ensemble de freinage selon la revendication 5, caractérisé en ce qu'il comprend une cinquième valve (50) pilotée par la pression du fluide de ladite source (5) et comprenant un clapet interrompant normalement une communication entre ladite première chambre de travail dudit maître-cylindre et un premier jeu (14) de moteurs de frein, et une sixième valve (60) pilotée par la pression du fluide de ladite source (5) et comprenant un clapet établissant normalement une communication entre ledit premier jeu (14) de moteurs de frein et un second jeu (12) de moteurs de frein, lesdites première et deuxième valves (10,20) étant reliées audit second jeu (12) de moteurs de frein, de telle façon qu'en cas de défaillance de ladite source (5), ledit maître-cylindre puisse fonctionner correctement avec isolation des deux circuits de freinage l'un par rapport à l'autre.

## Claims

1. Brake circuit with hydraulic amplification of the input force, connected to a working chamber of a master cylinder (1) controlled by a brake pedal and comprising a source of fluid under high pressure (5), a brake motor (12, 14) and a first pilot valve (10) which, by means of a non-return valve (17), makes or breaks communication between said source of fluid under pressure (5) and said brake motor (12) as a function of the difference between the pressures of the fluid of said source (5) and the fluid in said working chamber of the master cylinder (1), and a second valve (20) pilot-controlled by the pressure of the fluid of said source (5) and having a shutter (24) normally breaking communication between said working chamber and said brake motor and making this communication in the event of a failure of the source, characterized in that said first pilot valve (10) comprises a first chamber (41) connected to said working chamber, a second chamber (42) connected to said source of fluid under pressure (5) by means of said non-return valve (17), and a third chamber (43) located between said first and second chambers and connected to a reservoir of fluid under low pressure (44) by means of a third valve (40) pilot-controlled by the pressure of the fluid of said source (5), said third valve (40) having a shutter normally making communication between said reservoir (44) and said third chamber (43) and breaking this communication in the event of a failure of said source of fluid under pressure (5).

2. Brake circuit according to claim 1, characterized in that said first pilot valve (10) comprises two slides (45, 47) in series and of different diameters which, in response to the pressure of the fluid in the working chamber of said master cylinder (1), open in a first stage a first shutter (49) putting said second chamber (42) and said brake motor (12) in communication and in a second stage a second shutter (51) putting said source of fluid under pressure (5) and said second chamber (42) in communication by means of a non-return valve (17).

3. Brake circuit according to claim 1 or 2, characterized in that it comprises, furthermore, a fourth valve (30) pilot-controlled by the pressure of said source (5) and having a shutter normally making communication between a working chamber of said master cylinder (1) and a capacity (35), for determining a travel of said pedal, and breaking said communication in the event of a failure of the source.

4. Hydraulic brake assembly comprising a master cylinder having two working chambers, characterized in that it comprises two separate circuits according to any one of the preceding claims, connected respectively to each of said working chambers.

5. Hydraulic brake assembly comprising a master cylinder having two working chambers, characterized in that it comprises a single circuit according to claim 3, the first working chamber of said master cylinder (1) being connected to said fourth valve (30), while the second working chamber is connected to said first and second valves (10, 20).

6. Brake assembly according to claim 5, characterized in that it comprises a fifth valve (50) pilot-controlled by the pressure of the fluid of said source (5) and comprising a shutter normally breaking communication between said first working chamber of said master cylinder and a first set (14) of brake motors, and a sixth valve (60) pilot-controlled by the pressure of the fluid of said source (5) and comprising a shutter normally making communication between said first set (14) of brake motors and a second set (12) of brake motors, said first and second valves (10, 20) being connected to said second set (12) of brake motors, in such a way that, in the event of a failure of said source (5), said master cylinder can function correctly with the two brake circuits being isolated from one another.

## Patentansprüche

1. Bremskreis mit hydraulischer Verstärkung der Eingangskraft, der mit einer Arbeitskammer eines Hauptzylinders (1) verbunden ist, der durch ein Bremspedal gesteuert wird und eine Quelle (5) mit unter Hochdruck stehendem Fluid aufweist, einen Bremsmotor (12, 14), ein erstes gesteuertes Ventil (10), das in Abhängigkeit von der Differenz zwischen den Drücken des Fluids der Quelle (5) und des Fluids in der Arbeitskammer des Hauptzylinders (1) über eine Rückschlagventil (17) eine Verbindung zwischen der Quelle (5) mit unter Druck stehendem Fluid und dem Bremsmotor (12) herstellt oder unterbricht, sowie ein zweites Ventil (20), das durch den Druck des Fluids der Quelle (5) gesteuert wird und eine Klappe (24) aufweist, die normalerweise eine Verbindung zwischen der Arbeitskammer und dem Bremsmotor unterbricht und diese Verbindung bei einem Ausfall der Quelle herstellt, dadurch gekennzeichnet, daß das erste gesteuerte Ventil (10) eine mit der Arbeitskammer verbundene erste Kammer (41) aufweist, eine über das Rückschlagventil (17) mit der Quelle (5) mit unter Druck stehendem Fluid verbundene zweite Kammer (42) sowie eine dritte Kammer (43) zwischen der ersten und der zweiten Kammer, die über ein drittes, durch den Druck des Fluids der Quelle (5) gesteuertes Ventil (40) mit einem Behälter (44) mit unter Niederdruck stehendem Fluid verbunden ist, wobei das dritte Ventil (40) eine Klappe aufweist, die normalerweise eine Verbindung zwischen dem Behälter (44) und der dritten Kammer (43) herstellt und diese Verbindung bei einem Ausfall der Quelle (5) mit unter Druck stehendem Fluid unterbricht.

2. Bremskreis nach Anspruch 1, dadurch gekennzeichnet, daß das erste gesteuerte Ventil (10) in Reihe zwei Schieber (45, 47) mit unterschiedlichen Durchmessern aufweist, die sich in Reaktion auf den Druck des Fluids in der Arbeitskammer des Hauptzylinders (1) in einem ersten Takt öffnen, wobei eine erste Klappe (49) die zweite Kammer (42) und den Bremsmotor (12) in Verbindung setzt, sowie in einem zweiten Takt, wobei eine zweite Klappe (51) die Quelle (5) mit unter Druck stehendem Fluid und die zweite Kammer (42) über ein Rückschlagventil (17) in Verbindung bringt.

3. Bremskreis nach Anspruch 1 oder 2, dadurch gekennzeichnet, daß er außerdem ein viertes Ventil (30) aufweist, das durch den Druck der Quelle (5) gesteuert wird und eine Klappe aufweist, die normalerweise eine Verbindung zwischen einer Arbeitskammer des Hauptzylinders (1) und einer Kapazität (35) herstellt, um einen Hub an dem Pedal zu bestimmen, und die Verbindung bei einem Ausfall der Quelle unterbricht.

4. Hydraulische Bremseinheit, die einen Hauptzylinder mit zwei Arbeitskammern aufweist, dadurch gekennzeichnet, daß sie zwei getrennte Kreise nach einem der vorhergehenden Ansprüche aufweist, die jeweils mit einer Arbeitskammer verbunden sind.

5. Hydraulische Bremseinheit, die einen Hauptzylinder mit zwei Arbeitskammern aufweist, dadurch gekennzeichnet, daß sie einen einzigen Kreis nach Anspruch 3 aufweist, wobei eine erste Arbeitskammer des Hauptzylinders (1) mit dem vierten Ventil (30) verbunden ist, während die zweite Arbeitskammer mit dem ersten und dem zweiten Ventil (10, 20) verbunden ist.

6. Bremseinheit nach Anspruch 5, dadurch gekennzeichnet, daß sie ein fünftes Ventil (50) aufweist, das durch den Druck des Fluids der Quelle (5) gesteuert wird und eine Klappe aufweist, die normalerweise eine Verbindung zwischen der ersten Arbeitskammer des Hauptzylinders und einem ersten Satz (14) von Bremsmotoren unterbricht, sowie ein sechstes Ventil (60), das durch den Druck des Fluids der Quelle (5) gelenkt ist und eine Klappe aufweist, die normalerweise eine Verbindung zwischen dem ersten Satz (14) von Bremsmotoren und einem zweiten Satz (12) von Bremsmotoren herstellt, wobei das erste und das zweite Ventil (10, 20) so mit dem zweiten Satz (12) von Bremsmotoren verbunden sind, daß der Hauptzylinder bei einem Ausfall der Quelle (5) korrekt arbeiten kann, wobei die zwei Bremskreise gegeneinander isoliert sind.
